Europäisches Patentamt

European Patent Office

Office européen des brevets

(11) Veröffentlichungsnummer: **0 122 354**
**A2**

# (12) EUROPÄISCHE PATENTANMELDUNG

(21) Anmeldenummer: 83730092.0

(22) Anmeldetag: 29.09.83

(51) Int. Cl.³: **H 04 M 19/04**
**H 04 M 1/72**

(30) Priorität: 13.04.83 DE 3313775
12.07.83 DE 3325435

(43) Veröffentlichungstag der Anmeldung:
24.10.84 Patentblatt 84/43

(84) Benannte Vertragsstaaten:
DE

(71) Anmelder: ELMEG Elektro-Mechanik GmbH
Vöhrumer Strasse 30
D-3150 Peine(DE)

(72) Erfinder: Schmidt, Peter
Hostmannstrasse 75
D-3152 Ilsede 1(DE)

(72) Erfinder: Sommer, Kurt
Amselsteg 2
D-3202 Bad Salzdetfurth(DE)

(72) Erfinder: Perlich, Wolfgang, Dr.
Wilhelm-Hauff-Strasse 80
D-3014 Laatzen 3(DE)

(72) Erfinder: Wegner, Siegfried
Sandweg 6
D-3150 Peine (Vöhrum)(DE)

(74) Vertreter: Christiansen, Henning, Dipl.-Ing.
Unter den Eichen 108a
D-1000 Berlin 45(DE)

(54) Fernsprechvermittlungsanlage.

(57) Fernsprechvermittlungsanlage ohne Innensprechweg mit Speisung aus der Amtsleitung und der Möglichkeit, kommende bzw. gehende Gespräche direkt auf andere Apparate umzulegen, die insbesondere mit elektronische Schaltungen enthaltenden Tastenwahlblöcken als Wählorgan versehen sind, bei der Schaltmittel vorgesehen sind, welche bei Einleitung eines Umlegungsvorgangs nach Abgabe von Rufsignalen einer vorgegebenen Zahl oder für einen vorgegebenen Zeitraum den Umlegungsvorgang beenden und die zuvor unterbrochene Verbindung der umlegenden Nebenstelle mit der Amtsleitung erneut herstellen.

EP 0 122 354 A2

./...

Fig.1

ELMEG
Elektro-Mechanik GmbH
D-3150 Peine

E83.4-EU

22. September 1983

---

Fernsprechvermittlungsanlage

---

**B e s c h r e i b u n g**

Die Erfindung betrifft eine Fernsprechvermittlungsanlage der im Oberbegriff des Anspruchs 1 angegebenen Art.

Bei den vorgenannten Fernsprechvermittlungsanlagen, welche aus der Amtsleitung gespeist werden und lediglich das Um-

/2

legen von kommenden oder gehenden Gesprächen ermöglichen, ohne einen eigenen Sprechweg aufzuweisen, wird bei bestehender Amtsverbindung direkt mittels Wahl einer Ziffer als codierte Funktionssteuerung diejenige Sprechstelle, zu der das Amtsgespräch umgelegt werden soll, angewählt, wobei dem angewählten Teilnehmer nach Abnehmen des Hörers das betreffende Amtsgespräch unmittelbar zur Verfügung steht. Auf dieser Weise ist ein Umlegen sehr schnell möglich und die gebührenpflichtigen Gesprächszeiten für die Amtsleitung werden durch den Umlegungsvorgang nur unwesentlich verlängert. Das Betätigen eines zusätzlichen Steuerelements - wie beispielsweise der Erdtaste - entfällt.

Bei derartigen Nebenstellenanlagen besteht das Problem, daß während des Umlegevorgangs die umlegende Sprechstelle von der Amtsleitung - und somit von der Stromversorgung - getrennt ist. Da der aus der Amtsleitung zur Verfügung stehende (geringe) Strom während des Umlegevorgangs zur Erzeugung des Rufsignals für die angerufene Sprechstelle ausgenutzt werden muß, steht zur Versorgung des Wählorgans des umlegenden Apparates kein ausreichender Strom zur Verfügung, wenn dieses - wie bei modernen Tastenwahlblöcken üblich - mit elektronischen Bauelementen ausgerüstet ist, um dessen ordnungsgemäßes Funktionieren zu gewährleisten.

Der in Anspruch 1 angegebenen Erfindung liegt demgemäß die Aufgabe zugrunde, eine Vermittlungsanlage der eingangs genannten Gattung anzugeben, bei der die Beendigung eines Umlegeversuchs bei erfolglos gerufener Sprechstelle zwecks Abgabe einer entsprechenden Mitteilung an den an den anderen Teilnehmer bzw. Weiterführung des Gesprächs ohne manuelle Betätigung eines Schaltelements von demjenigen Apparat erfolgen kann, von dem aus die Umlegung veranlaßt wurde.

Die Erfindung beruht auf der Erkenntnis, daß gerade kleine Vermittlungsanlagen, welche aus der Amtsleitung gespeist werden, in der Regel dazu verwendet werden, um die Entfernungen von Personen innerhalb eines Büros oder Haushalts jeweils zum nächsten Telefon zu verringern, so daß unnötige Wegzeiten abgebaut werden. Damit wird auch die Zeit geringer, welche bei einem Anruf bis zum Abnehmen vergeht. Bei einem internen Umlegevorgang braucht infolgedessen in der Regel nur ein relativ kurzer Zeitraum abgewartet werden, bis der Ruf beantwortet wird. Danach kann ein automatisches Zurückgeben der Amtsleitung erfolgen. Damit ist mit der Erfindung eine wesentliche Bedienungsvereinfachung verbunden, da es nicht erforderlich ist, bei einem erfolglosen Umlegungsversuch - wie bisher - ein zusätzliches Bedienungselement zu betätigen, um die Amtsleitung zurückzuerhalten, damit der anrufende oder angerufene Teilnehmer über den fehlgeschlagenen Vermittlungsversuch unterrichtet werden kann. Daneben besteht selbstverständlich der eingangs erwähnte Vorteil, daß für die Stromversorgung der Nebenstellenanlage kein besonderes Netzteil erforderlich ist.

Durch die Zeitbegrenzung der Rufzeiten wird ebenfalls dazu beigetragen, die gebührenpflichtigen Zeiten der Amtsleitungen zu verringern und auch die Zahl der Belegungen von Amtsleitungen trotz Umlegung insgesamt zu verkürzen. Das ist insbesondere unter dem Gesichtspunkt von Vorteil, daß heutzutage zunehmend Auslandsgespräche geführt werden, bei der während der Zeiträume des Umlegens erhebliche Gebühren anfallen können.

Sollte wider Erwarten ein längerer Rufvorgang notwendig und erwünscht sein, so kann in diesen Fällen durch ein erneutes Betätigen der entsprechenden Zifferntaste beim umlegenden Apparat ein wiederholter Ruf für eine fest begrenzte Zeitdauer ausgelöst werden. Die Tatsache, daß bis zum Ausführen des erneuten Umlegungsvorgangs kurzzeitig kein Ruf ausgesandt wird, ist ohne Bedeutung, da sich der gerufene Teilnehmer wahrscheinlich bereits während der ersten Rufsignale in Richtung auf den Apparat zu in Bewegung gesetzt hat und damit mit großer Wahrscheinlichkeit sofort abheben wird, wenn die ersten Rufsignale des nachfolgenden Umlegungsvorgangs eingehen. Insgesamt handelt es sich bei dem somit gegebenen Bedienungsablauf um ein ergonomisches Konzept, welches zudem eine Vereinfachung bezüglich der zu verwendenden Bauelemente bedeutet.

Bei einer bevorzugten Weiterbildung der Erfindung wird dem umlegenden Teilnehmer mit der Beendigung des Rufs während des Umlegungsversuchs und dem Zurückschalten zur Amtsleitung ein kurzer Aufmerksamkeitston übermittelt, so daß er über die erfolglose Beendigung des Umlegungsversuchs informiert und gleichzeitig zum Sprechen mit dem über die Amtsleitung angeschlossenen Teilnehmer aufgefordert ist. Dieser Aufmerksamkeitston unterscheidet sich von demjenigen akustischen Signal, welches abgegeben wird, wenn der Teilnehmer, zu dem umgelegt wurde, das Amtsgespräch übernommen hat. Im letztgenannten Fall ist nämlich keine weitere Aktivität des umlegenden Teilnehmers erforderlich. Zweckmäßigerweise kann dabei auf jegliches Signal verzichtet werden und die Bestätigung der erfolgreichen Umlegung geschieht lediglich dadurch, daß der dem umlegenden Teilnehmer übermittelte Freiton endet, und gegebenenfalls statt dessen der Besetztton übermittelt wird.

Dieser Weiterbildung liegt demnach die Aufgabe zugrunde, das zeitoptimierte direkte Umlegen auch dahingehend zu verbessern, daß die zeitliche Beanspruchung des umlegenden Teilnehmers verringert wird. Das geschieht dadurch, daß der umlegende Teilnehmer nicht mehr für die Dauer der Rufzeit bei dem Teilnehmer, zu dem das Gespräch umgleget werden soll, in seiner Aufmerksamkeit beansprucht wird, sondern dieser nur noch in dem Fall, daß der Umlegungsversuch erfolglos blieb, die Rückgabe des Amtsgesprächs signalisiert erhält. Es ist also kein Überwachungsvorgang der Signale in der Hörmuschel mehr erfoderlich, sondern es erfolgt eine erneute Beanspruchung der Aufmerksamkeit nur im Falle der fehlgeschlagenen Umlegung durch eine erneute Rufsignalisierung. Selbst wenn der umlegende Teilnehmer während des Rufes einer anderweitigen Tätigkeit nachgehen sollte, wird er durch den umzulegenden Teilnehmer selbst, wenn dieser sich bei ihm im Falle des fehlgeschlgenen Umlegungsversuchs erneut bei ihm meldet, an diesen Vorgang erinnert und es bedarf keinerlei entsprechender Bedienungshinweise oder Anzeigevorrichtungen für diesen Betriebszustand bei der umlegenden Sprechstelle. Das Gespräch gelangt vorteilhafterweise bei der Anlage gemäß der Erfindung immer zu der Sprechstelle zurück, welche die Umlegung veranlaßt hat, so daß auch insoweit Mißverständnisse ausgeschlossen sind. Insoweit ergibt sich auch eine besondere Anpassung an die Bedürfnisse von Privathaushaltungen, in denen in der Regel eine besondere Abfragestelle nicht vorgesehen ist.

In Kombination mit dem bekannten Umlegen ohne Sprechverbindung zwischen den beiden Teilnehmern der Vermittlungsanlage läßt sich auf diese Weise eine Optimierung erreichen, welche sowohl die zeitliche Inanspruchnahme des Anrufenden als auch die des umlegenden Teilnehmers zu einem Minimum macht. Da nach einem Umlegevorgang in der Regel ohnehin ein gegenseitiges Begrüßen der beiden nunmehr miteinander verbundenen Teilnehmer erfolgt, ist eine Ankündigung durch den umlegenden Teilnehmer über den Innensprechweg in der Regel nicht erforderlich, da eine Gesprächsfortsetzung nach dem Umlegevorgang auch ohne Ankündigung ohne weiteres möglich ist, auch wenn dem Teilnehmer, zu dem das Gespräch umgelegt wird, die technischen Möglichkeiten der Anlage nicht bekannt sind. Für ihn stellt der Umlegungsvorgang einfach ein normales kommendes Gespräch dar. Insoweit tragen die Maßnahmen gemäß der Weiterbildung der Erfindung mit einer zeitlichen Optimierung der Umlegungs- und Überwachungsvorgänge außerordentlich zu einer Bedienungsvereinfachung bei, da das Umlegen nunmehr ohne besonderen Aufmerksamkeit durch einen einzigen Handgriff erfolgen kann, welche den umlegenden Teilnehmer beispielsweise auch in seiner Konzentration bei einer vorliegenden Arbeit nicht wesentlich beeinträchtigt.

Somit braucht der umlegende Teilnehmer auch nicht mehr den Hörer in der Hand zu halten, um über die ihm übertragenen Hörzeichen festzustellen, ob der Teilnehmer, zu dem das Amtsgespräch umgelegt werden soll, abgenommen hat oder nicht. Da eine weitere Aktivität des umlegenden Teilnehmers gegebenenfalls nur dann erforderlich ist, wenn der gerufene Teilnehmer nicht abnimmt, führt das Verfolgen der Hörsignale in den meisten Fällen nicht zu einer Handlung des umlegenden Teilnehmers.

Die Lösung, nach der bei aufgelegtem Hörer des umlegenden Teilnehmers für den Fall, daß der gerufene Teilnehmer nicht abnimmt, ein erneuter Ruf erzeugt wird, wobei die Verbindung mit dem über die Amtsleitung verbundenen Teilnehmer erst nach Abnehmen durch den umlegenden Teilnehmer erneut hergestellt wird, beruht auf der Erkenntnis, daß eine Mitteilung an den umlegenden Teilnehmer seitens der Vermittlungsanlage nur dann abgegeben werden muß, wenn der gerufene Teilnehmer nicht abnimmt.

Bei dieser Ausführung der Erfindung bietet sich ferner der Vorteil, daß auch solche Telefonapparate verwendet werden können, welche mit aktiven Schaltungen ausgerüstet sind, die Hörzeichen erst bei Versorgung mit solchen größeren Strömen übertragen, die mit einer aus der Amtsleitung gespeisten Vermittlungseinrichtung nicht erzielbar sind.

Bei einer anderen Weiterbildung der Erfindung läßt sich durch den umlegenden Teilnehmer nicht nur durch Wahl einer einzelnen Ziffer die zu rufende Nebenstelle festlegen, sondern statt dessen eine Ziffernfolge eingeben, wobei die Nebenstellen entsprechend der Ziffernfolge nacheinander jeweils für einen festen Zeitraum gerufen werden. Bei einer bevorzugten Ausführung kann durch mehrfaches Wählen einer derselben Nebenstelle zugeordneten Ziffer hintereinander ein verlängerter Ruf ausgelöst werden. Es besteht weiterhin die alternative vorteilhafte Ausführungsmöglichkeit, daß die umlegende Sprechstelle nicht selbsttätig im Falle einer erfolglosen Umlegung zurückgerufen wird, sondern nur in dem Fall, wenn innerhalb der einprogrammierten Ziffernfolge die Ziffer der eigenen Sprechstelle zuletzt eingegeben wurde.

Eine Alternative besteht darin, daß nicht im Falle einer erfolglosen Umlegung die umlegende Nebenstelle erneut gerufen wird, sondern nur in dem Fall, daß innerhalb der einprogrammierten Ziffernfolge die Ziffer der eigenen Sprechstelle zuletzt eingegeben wurde.

Auf diese Weise kann durch den umlegenden Teilnehmer entschieden werden, ob er im Falle des erfolglosen Umlegungsversuches noch einmal angerufen werden möchte oder nicht. Im letztgenannten Fall hätte er dem über die Amtsleitung anrufenden Teilnehmer schon vorher mitgeteilt, daß wenn der gewünschte Teilnehmer nicht abhebt, die Verbindung automatisch ausgelöst wird, wobei dem über die Amtsleitung anrufenden Teilnehmer gegebenenfalls ein entsprechendes Signal - wie das "Besetzt"-Zeichen - übermittelt werden kann.

Durch geeignete logische Verknüpfungsmittel besteht weiterhin die bevorzugte Möglichkeit, festzulegen, daß die umlegende Sprechstelle nur dann gerufen wird, wenn die entsprechende Ziffer in der programmierten Folge zuletzt eingegeben ist. Ein alleiniges Eingeben der Ziffer der umlegenen Sprechstelle würde ebenfalls nicht zu einem Ruf führen. Bei einer anderen bevorzugten Variante der Erfindung wird bei einem erfolglosen Umlegungsversuch selbsttätig die umlegende Sprechstelle gerufen, ohne daß die eigene Nummer "einprogrammiert" werden muß. Dieser Ruf läßt sich bei einer anderen Variante aber bedarfsweise unterbinden, wenn eine entsprechende Ziffer - beispielsweise die "null" - zuletzt eingegeben wird.

Die aufeinanderfolgend eingegebenen Ziffern werden bei einer hardwaremäßigen Lösung in einem Schieberegister festgehalten, während bei einer Ausführung mit Mikroprozessor die entsprechenden Daten in aufeinanderfolgend abzuarbeitenden Registern gespeichert werden.

Die Kette der Rufe wird unterbrochen und der Umlegungsvorgang beendet, wenn eine der gerufenen Sprechstellen abgenommen wird.

Die Funktionen der Übermittlung von Hörzeichen an die umlegende Sprechstelle und des Wiederanrufs bei erfolglosem Umlegungsversuch lassen sich auch in einer Schaltung miteinander kombinieren, wobei in diesem Fall der umlegende Apparat daraufhin überwacht werden muß, ob die Schleife bei erfolgloser Beendigung des Umlegungsversuchs unterbrochen ist. In diesem Fall würde an den umlegenden Apparat ein Ruf abgehen.

Andere vorteilhafte Weiterbildungen der Erfindung sind in den Unteransprüchen gekennzeichnet bzw. werden bei der

E83.4-EU                          - 10 -

nachstehenden Darstellung anhand zweier bevorzugter Ausführungsbeispiel der Erfindung näher beschrieben. Es zeigen:

Figur 1 ein erstes Ausführungsbeispiel der Erfindung in
blockschaltungsmäßiger Darstellung der logischen Schaltverknüpfungen sowie

Figur 2 eine entsprechende Darstellung eines zweiten
Ausführungsbeispiels.

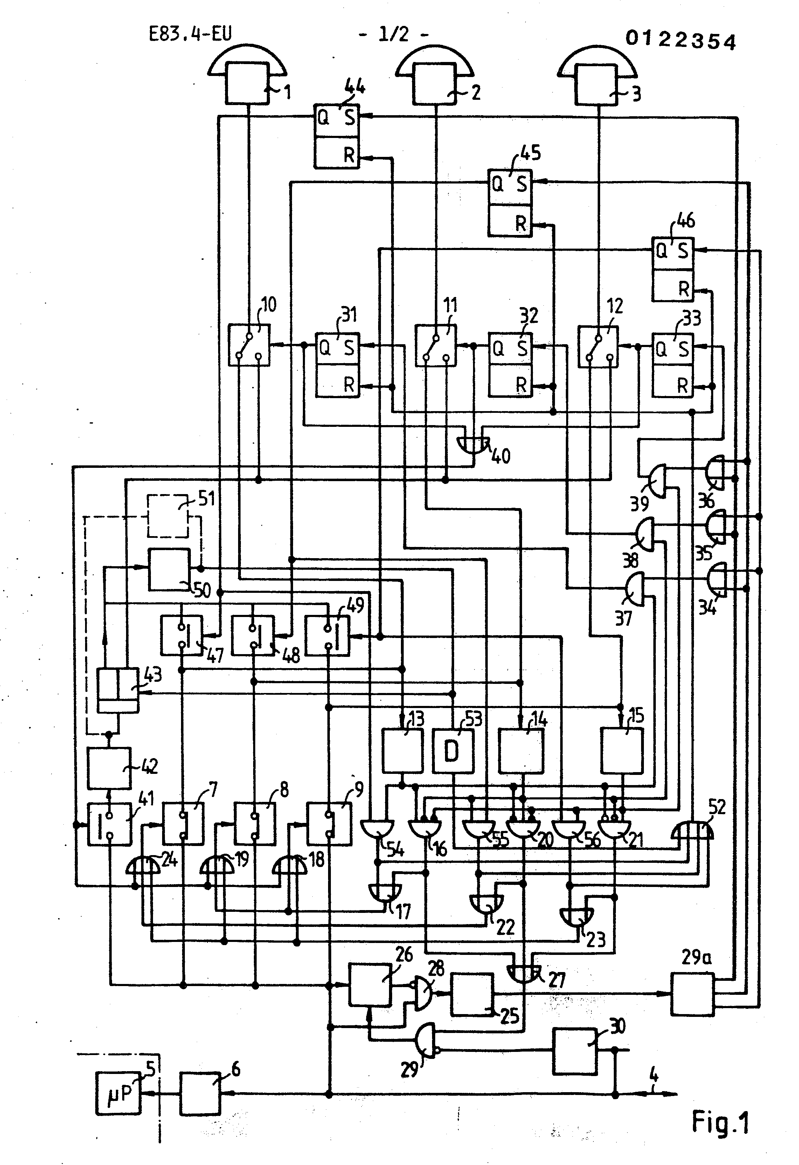

In der Figur 1 ist ein Blockschaltbild eines ersten Ausführungsbeispiels der erfindungsgemäßen Nebenstellenanlage
wiedergegeben. (Bei der vereinfachten Darstellung der logischen Verknüpfungen wurden solche Schaltungsmittel unberücksichtigt gelassen, welche eine Sicherung gegen Fehlbedienungen oder unzulässige Bedienungen bilden, da diese
die Übersichtlichkeit verringert hätten.) In der Schaltung
sind drei Nebenstellenapparate 1 bis 3 wahlweise zum
Führen eines Telefonats mit der Amtsleitung 4 verbindbar,
wobei zwischen den Nebenstellenapparaten 1 bis 3 keine
Sprechverbindung möglich ist. Es kann jeweils durch
Auslösung der entsprechenden Funktion ein Umlegen von ankommenden oder abgehenden Amtsgesprächen zu einem anderen
angeschlossenen Apparat erfolgen. Die Steuerung des gesamten Funktionsablaufs erfolgt zweckmäßigerweise mittels
eines Mikroprozessors (Block 5), dessen Funktion nicht im
Detail wiedergegeben ist. Das Programm des Mikroprozessors
steuert aber jeweils die dargestellten Funktionselemente
im beschriebenen Ablauf bzw. erzeugt die betreffenden
logischen Funktionen bzw. Verknüpfungen innerhalb des Programmablaufs. Der Mikroprozessor 5 wird mittels eines Stromversorgungsteils 6 - das ebenfalls lediglich schematisch dargestellt ist - aus der Amtsleitung 4 gespeist, wobei der Stromverbrauch des Mikroprozessors wenn er in CMOS-Technik hergestellt ist nahezu vernachlässigt werden kann.

Im Falle eines von der Amtsleitung eingehenden Rufs gelangt das Rufsignal über Schaltelemente 7, 8 und 9, welche Ruhekontakte aufweisen, und weitere Umschalter 10, 11 bzw. 12 jeweils zu den Apparaten 1, 2 bzw. 3.

Wird einer der Apparate 1 bis 3 abgehoben, so wird dieser Zustand durch die jeweils zugeordnete Schleifenerkennungsschaltung 13, 14 bzw. 15 erfaßt und das ankommende Gespräch dem abgehobenen Apparat zugeordnet. Eine derartige Schleifenerkennungsschaltung für eine Nebenstellenanlage mit zwei Apparaten, welche für die Speisung aus der Amtsleitung bestimmt ist, ist in der deutschen Patentanmeldung P 32 41 428.5 derselben Anmelderin beschrieben. Unter der Annahme, daß der Apparat 1 abgenommen wird, gelangt das Ausgangssignal über ein UND-Gatter 16, eine ODER-Gatter 17 und weitere ODER-Gatter 18 und 19 zu Schaltelementen 8 und 9, welche im aktivierten Zustand eine Leitungsunterbrechung bewirken, so daß die Apparate 2 und 3 von der Amtsleitung getrennt werden. Das UND-Gatter 16 wird gesperrt, wenn bei einem der anderen Apparate vorher eine Schleife erkannt wurde und diesem bereits die Amtsleitung zugeordnet wurde. Die weiteren dargestellten UND-Gatter 20, 21 sowie die ODER-Gatter 22, 23 und 24 arbeiten in entsprechender Weise im Hinblick auf die Apparate 2 und 3 und ordnen entsprechend jeweils dem zuerst abgenommenen Apparat die Amtsleitung zu. Derselbe Schaltzustand stellt sich ein, wenn ohne eingehenden Anruf ein abgehendes Amtsgespräch geführt wird und zunächst eine Amtsrufnummer ausgegeben wurde.

Nach Herstellung der Verbindung zwischen einem der Apparate 1 bis 3 und der Amtsleitung 4 kann ein Umlegungsvorgang durch Betätigung des Wählorgangs des mit der Amtsleitung verbundenen Apparats eingeleitet werden.

Um die einen Umlegungsvorgang einleitenden Wählzeichen von denjenigen zu unterscheiden, welche bei einem abgehenden Gespräch ausgegeben werden, ist noch eine zusätzlich erforderliche Logikschaltung vorgesehen: Die von dem mit der Amtsleitung verbundenen Apparat abgegebenen Wählzeichen gelangen zu einem Wählzeichendecoder 25, der bevorzugt auf das Impulswahlverfahren abgestimmt ist. Vor dem Eingang des Wählzeichendecoders 25 ist noch ein als Monoflop ausgebildeten Zeitglied 26 vorgesehen, welches die Abgabe von Wählzeichen auf einen vorgegebenen Zeitraum begrenzt. Diese Abgabe ist beschränkt auf einen Zeitraum von ungefähr zehn Sekunden nach Abgabe des letzten Wählzeichens nach erstmaliger Schleifenerkennung, die nicht durch einen Umlegevorgang veranlaßt wurde (Ausgangssignale der UND-Gatter 16, 20 oder 21). Dazu gelangen die genannten Ausgangssignale zu einem ODER-Gatter 27, durch dessen Ausgangssignal das genannte Zeitglied 26 für den Zeitraum gesetzt wird, während dessen dem Wählzeichendecoder 25 keine Signale zugeführt werden, was mittels eines UND-Gatters 28 bewirkt wird, dem das Ausgangssignal des Zeitgliedes 26 an einem invertierenden Eingang zugeleitet wird.

Das Ausgangssignal des ODER-Gatters 27 wird weiterhin über ein zusätzliches UND-Gatter 29 geleitet, an dessen weiterem invertierenden Eingang das Ausgangssignal einer Erkennungsschaltung 30 für eingehende Amtsrufe anliegt, so daß die Aktivierung des Zeitgliedes 26 in dem Fall nicht erfolgt, wenn eine Schleifenerkennung auf einen eingehenden Amtsruf hin erfolgte. Auf diese Weise ist sichergestellt, daß ein nach einem eingehenden Ruf abgegebenes Wählzeichen ohne weiteres einen Umlegevorgang auslöst. Die vom Wählzeichendecoder 25 abgegebene Wählzeicheninformation gelangt vom Ausgang des UND-Gatters 28 zu einer Auswertungsschaltung 29a, welche in Abhängigkeit von der Wählzeicheninformation einen Rufvorgang bei dem Apparat veranlaßt, zu dem hin umgelegt werden soll.

Gleichzeitig wird bei dem Apparat, von dem der Umlegevorgang veranlaßt wird, ein diesem zugeordnetes Schaltelement (Flip-Flop 31, 32 bzw. 33) gesetzt, so daß der Umlegezustand für diesen Apparat festgehalten ist. Die entsprechende logische Auswahl erfolgt über ODER-Gatter 34, 35 und 36 mit den jeweils zugeordneten UND-Gattern 37, 38 und 39. Über die vorgenannten Gatter wird jeweils das zu dem umlegenden Apparat gehörige Flip-Flop 31, 32 bzw. 33 gesetzt, wenn ein Umlegesignal für einen der beiden anderen Apparate erkannt wurde (ODER-Gatter 34, 35 bzw. 36) und gleichzeitig die Schleifenerkennung des umlegenden Apparates ein Ausgangssignal abgibt (Verknüpfung über UND-Gatter 37, 38 bzw. 39).

Durch das gesetzte Flip-Flop 31 wird das Umschaltelement 10 betätigt, so daß der umlegende Apparat von der Amtsleitung getrennt und mit einer Leitung verbunden wird, welche diesem das Rufsignal zuführt. Gleichzeitig wird über ein ODER-Gatter 40, welches an seinem Ausgang ein Signal abgibt, wenn eines der Flip-Flops 31 bis 33 gesetzt ist, die Amtsleitung mittels eines Schalters 41 mit einer Halteschaltung 42 verbunden, welche für die Amtsleitung den zum Aufrechterhalten des Belegtzustandes notwendigen Widerstand bildet. Dieser Widerstand wird beispielsweise durch eine Schaltung zur gleichzeitigen Stromversorgung einer Rufstromschaltung realisiert, wie sie in der deutschen Patentanmeldung P 32 44 194.2 derselben Anmelderin beschrieben ist.

Das Ausgangssignal der Halteschaltung 42 steuert die Erzeugung des Rufstroms und der akustischen Kennungssignale für die umlegende Nebenstelle mittels einer Signalschaltung 43. Der Rufstrom liegt somit an dem entsprechenden Ausgang lediglich während des Umlegungsvorgangs (Ausgangssignal des ODER-Gatters 40) an.

Der Apparat, zu dem eine Umlegung hin erfolgen soll, wird durch die Schaltung 29a adressiert. Dazu wird ein diesem Apparat zugeordnetes Flip-Flop 44, 45 bzw. 46 gesetzt. In dem dargestellten Fall, bei dem eine Umlegung von dem Apparat 1 vorgenommen werden soll, ist somit eines der Flip-Flops 45 bzw. 46 gesetzt. Das gesetzte Flip-Flop aktiviert jeweils einen der zugeordneten Schalter 47, 48 oder 49, welcher den umzulegenden Apparat mit dem Ausgangssignal der Signalschaltung 43 verbindet, so daß der Internruf dem betreffenden Apparat signalisiert wird. Ein entsprechendes akustisches Signal wird ebenfalls von der Schaltung 43 abgegeben und dem umlegenden Apparat über den jeweils zugeordneten Umschalter 10, 11 bzw. 12 zugeführt. Während der Ruf hinausgeht, wird üblicherweise das sogenannte "Freizeichen" gegeben.

Erfindungsgemäß wird nunmehr die Anzahl der abgegebenen Rufsignale (Zähler 50) oder (alternativ) die Zeit der Umlegung (gestrichelt Zeitmeßschaltung 51) überwacht. Der Zähler 50 gibt somit ein Ausgangssignal ab, wenn nach dem Umlegen eine vorgegebene Anzahl von Rufen (vorzugsweise drei oder vier) abgegeben wurde, während die Zeitmeßschaltung 51 ein Ausgangssignal abgibt, wenn der Umlegungsvorgang eine vorgegebene Zeit angedauert hat, ohne daß vom anderen Teilnehmer abgenommen wurde. In diesem Fall wird die Umlegung als erfolglos abgebrochen und es erfolgt ein Zurücksetzen aller Flip-Flops 31 bis 33 und 44 bis 46 über ein entsprechendes ODER-Gatter 52 und die jeweiligen Rücksetzeingänge der genannten Flip-Flops. Gleichzeitig wird ein Impuls an die Signalschaltung abgegeben, welche daraufhin ein zusätzliches prägnantes kurzes Kennungssignal abgibt, welches dem umlegenden Teilnehmer signalisiert, daß das Gespräch nicht übernommen wurde und er wieder mit dem Anrufer auf der Amtsleitung verbunden ist. Eine entsprechende akustische Kennung könnte auch in der einfachen Beendigung der Ausgabe des Freizeichens bestehen, jedoch müßte hierbei der umlegende Teilnehmer einen bestimmten Zeitraum vergehen lassen, um den veränderten Betriebszustand sicher zu erkennen. Im Falle der Übernahme des Gesprächs durch den gerufenen Teilnehmer wechselt das "Frei-" zum "Besetzt-"zeichen.

Kurze Zeit nach Abgabe des Aufmerksamkeitstons an den die Umlegung veranlassenden Nebenstellenanschluß wird - verzögert durch ein Verzögerungsglied 53 - ein Zurücksetzen der betreffenden Schaltelemente aus dem umgelegten Zustand veranlaßt. Der umlegende Teilnehmer erhält die Amtsverbindung zurück und kann dem anrufenden oder angerufenen Teilnehmer mitteilen, daß der Umlegeversuch fehlgeschlagen ist. Hierbei wird die automatische Beendigung des Rufes nach relativ kurzer Zeit (einige Sekunden oder wenige Rufsignale) erfolgen, da - wie anfangs erwähnt - davon ausgegangen werden kann, daß sich beim Vorhandensein einer Mehrzahl von einer Amtsleitung zugeordneten Fernsprechapparaten die gewünschte Person in relativ geringer Entfernung zu dem Apparat, auf den das Gespräch umgelegt werden soll, befindet.

Sollte jedoch Grund zu der Annahme bestehen, daß die gewünschte Person weiter entfernt ist, so kann unmittelbar darauffolgend ein erneuter Umlegungsversuch unternommen werden, wobei der wartende Teilnehmer in der Amtsleitung über diesen Versuch mündlich informiert werden kann. Durch die erfindungsgemäße automatisierte Rückschaltung wird damit die notwendige Handhabung zum Beenden des Rufzustandes eingespart, womit eine Vereinfachung verbunden ist, da zu erwarten ist, daß die Mehrzahl der Rufzustände von kürzerer Dauer sind. Eine zusätzliche manuelle Betätigung ist nur in dem Fall erforderlich, wenn ausnahmsweise ein längerer Ruf erfolgen soll. Damit ergibt sich der zusätzliche Vorteil, daß der über die Amtsleitung verbundene, wartende Teilnehmer zwischenzeitlich nach einer vorgegebenen Maximalzeit eine mündliche Mitteilung erhält, da dieser, wenn der Umlegevorgang wider Erwarten eine längere Zeit erfordert und er ohne Nachricht bleibt, möglicherweise zwischenzeitlich enttäuscht auflegt. Durch die verhältnismäßig kurze Rufdauer ist es weiterhin in einfacher Weise möglich, bei mehreren Nebenstellen nacheinander anzufragen, falls nicht genau bekannt ist, wo sich die gesuchte Person befindet. Da das manuelle "Zurückschalten" entfällt, wird jeweils die Hälfte der auszuführenden Handhabungen eingespart.

Im Erfolgsfall - wenn der gerufene Teilnehmer, zu dem das Gespräch umgelegt werden soll, abhebt, erfolgt ebenfalls entsprechend ein Zurücksetzen über UND-Gatter 54, 55 oder 56, wenn nämlich bei dem gerufenen Teilnehmer eine Schleife erkannt wird. In diesem Fall werden über die ODER-Gatter 18, 19 bzw. 24 diejenigen Schalter 7, 8 bzw. 9 geöffnet, welche dem gerufenen Apparat nicht zugeordnet sind, so daß dieser Apparat ohne weiteres die Amtsverbindung erhält. Der Ausgangszustand des ODER-Gatters 40, welcher die Halteschaltung 41, 42 gesetzt und die Schalter 7, 8 bzw. 9 geöffnet gehalten hatte, wird aufgehoben. Der Teilnehmer, zu dem das Amtsgespräch umgelegt wurde, kann dieses fortsetzen.

Bei einer weiteren - nicht dargestellten - vorteilhaften Ausführungsvariante sind die Schaltmittel derart ausgebildet, daß die das "Umlegungsziel" kennzeichnenden Flip-Flops mittels einer entsprechenden Verknüpfung über logische Gatter bei einer erfolglosen Umlegung erst dann zurückgesetzt werden, wenn auch die Amtsverbindung unterbrochen wird. Sollte der gerufene Teilnehmer also seinen

Apparat erst kurzfristig nach Beendigung des Rufvorgangs erreichen, so wird in diesem Fall durch das Abnehmen des Hörers des zuvor gerufenen Apparates entweder sofort trotzdem noch eine Umlegung des Gesprächs ausgeführt, oder aber dem mit der Amtsleitung verbundenen Teilnehmer der Nebenstellenanlage durch ein entsprechendes Tonsignal zu Erkennen gegeben, daß ein erneuter Umlegungsversuch erfolgreich sein wird.

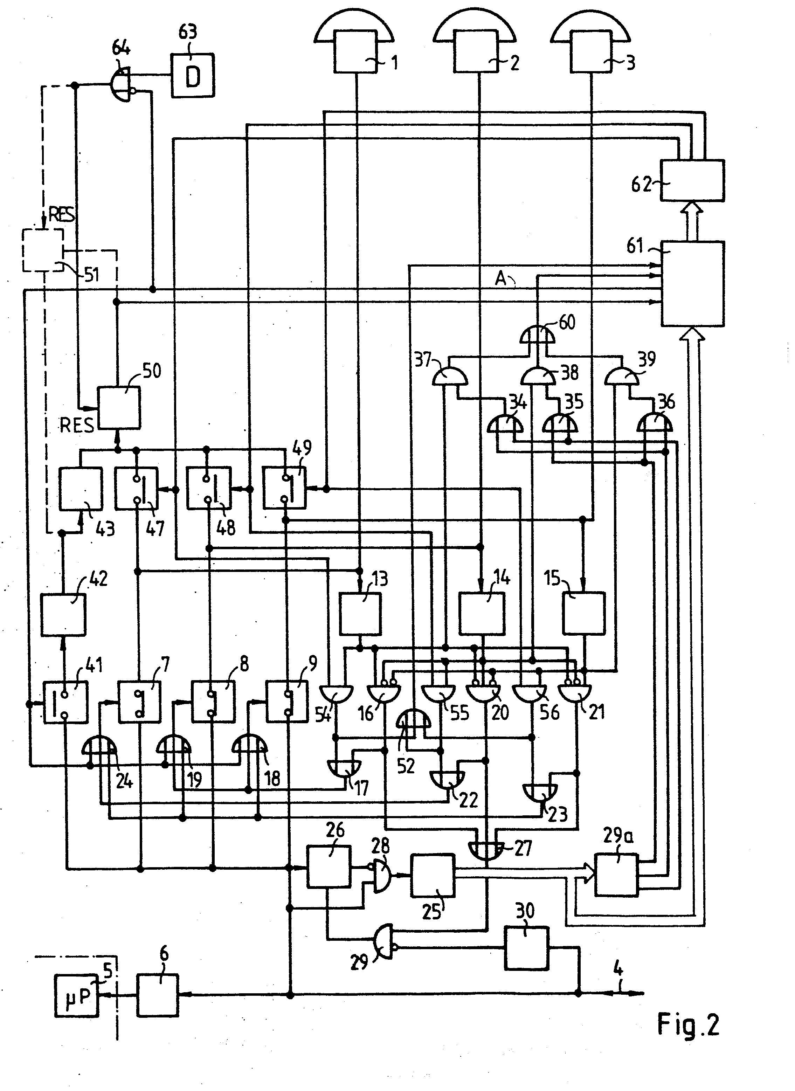

Das in Figur 2 wiedergegebene Ausführungsbeispiel macht im wesentlichen Gebrauch von denselben Bauelementen, wie sie in Figur 1 wiedergegeben sind. Diejenigen Bauelemente, welche sich in ihrer Funktion von der Ausführung gemäß Figur 1 unterscheiden, sollen nunmehr kurz beschrieben werden:

Wie bei der in Figur 1 dargestellten Ausführung wird der Umlegungszustand dadurch erkannt, daß bei einem Amtsgespräch ein Wählzeichen abgegeben wird, welches nicht der eigenen Sprechstelle zugeordnet ist. Das durch den Wählzeichen-Dekoder 25 erzeugte Signal wird zusammen mit einem Ausgangssignal der Schleifenerkennungsschaltungen 13 bis 15 über die Gatter 34 bis 39 und ein weiteres ODER-Gatter 60 zu einem entsprechenden Ausgangssignal zusammengefaßt, welches ein Schieberegister 61 zur Datenaufnahme aktiviert. Im Falle der Dateneingabe wird das Schieberegister 61 synchron mit den eingegebenen Ziffern getaktet, d.h. jede folgende neue Ziffer wird dem nachfolgenden Speicherplatz zugeführt. Das Zeitglied 26 ist dabei derartig ausgebildet, daß es nach Ausblendung der auf die Amtsleitung abgegebenen Ziffern nur die Weitergabe solcher Wählzeichen veranlaßt, die mit einer bestimmten minimalen Folgefrequenz eingegeben werden. Sollte also nach Eingabe einer Ziffer eine Pause von mehreren Sekunden entstehen, so wird dieses Zeichen nicht mehr in das Schieberegister eingespeichert. Damit ist gewährleistet, daß nachträglich versehentlich eingegebene Zeichen nicht zu Rufzuständen führen.

Ist das Schieberegister 61 mit mindestens einer Ziffer geladen, so gibt ein Signal an einem Ausgang A des Schieberegisters an, daß der Umlegungszustand eingeleitet ist und nunmehr ein Rufsignal an einen adressierten Apparat ausgegeben wird. Das Signal am Ausgang A trennt über ODER-Gatter 18, 19 bzw. 24 den umlegenden Apparat von der Amtsleitung und verbindet diese über einen Schalter 41 - wie zuvor dargestellt - mit der Halteschaltung 42. Die Rufstromerzeugerschaltung 43 gibt ebenfalls Rufsignale ab, deren Dauer von dem Zähler 50 bzw. der Zeitmeßschaltung 51 überwacht wird. Das Ausgangssignal des Schieberegisters 61, das die Information der eingespeicherten Ziffern in der ursprünglichen Reihenfolge beinhaltet, gelangt zu einem Adressendekoder 62, durch den - je nach ausgegebener Ziffer - einer der Apparate 1, 2 oder 3 über die Schalter 47, 48 oder 49 mit dem Rufstrom als Ausgangssignal der Schaltung 43 verbunden wird. Das Schieberegister 61 wird beim Auslesen der Daten getaktet durch das Ausgangssignal der Schaltungen 50 oder 51, so daß nach Ablauf des vorgegebenen Zeitraums oder der vorgegebenen Anzahl von Rufsignalen die der nächsten eingegebenen Ziffer entsprechende Sprechstelle gerufen wird. Mit Abgabe des Taktimpulses für das Schieberegister 61 wird ein über eine Verzögerungsschaltung 63 kurzeitig später erscheinendes Signal erzeugt, welches den Zähler 50 bzw. die Zeitmeßschaltung 51 über deren Rücksetz-Eingang in einen Ausgangszustand zurücksetzt. Über den invertierenden Eingang eines ODER-Gatters 64 werden die Schaltungen 50 bzw. 51 auch dann zurückgesetzt gehalten, wenn im Schieberegister 61 keine Ziffer enthalten, also der Umlegungszustand beendet ist.

Für den Fall, daß die gerufene Sprechstelle abgenommen wird, d.h. die entsprechende Schleifenerkennungsschaltung anspricht, wird über eines der UND-Gatter 54, 55 oder 56 ein Signal dem ODER-Gatter 52 zugleitet, dessen Ausgangssignal mit dem Rücksetz-Eingang des Schieberegisters 61 verbunden ist. Damit wird der Inhalt des Schiebregisters gelöscht. Der Ausgang A des Schieberegisters wird gleichzeitig inaktiv, so daß die Halteschaltung 41 abfällt. Der abgenommene Apparat erlangt direkt über eines der Gatter 17, 22 oder 23 die Amtsleitung, welche anschließend weiter für diesen Apparat gehalten wird, so daß der Umlegungsvorgang beendet ist. Wurde keiner der Apparate abgenommen, so fällt die Halteschaltung ohne weiteres ab, wobei gegebenenfalls dem über die Amtsleitung anrufenden Teilnehmer noch ein entsprechendes akustisches Kennsignal - wie das "Besetzt"-Zeichen - übermittelt werden kann, damit dieser auflegt. In der Regel wird aber - falls erwartet wird, daß an den übrigen Sprechstellen kein Teilnehmer zu erreichen sein wird - als letzte Ziffer im Schieberegister 61 wieder die Nummer der eigenen Sprechstelle programmiert, so daß dem über die Amtsleitung anrufenden Teilnehmer eine entsprechende Durchsage übermittelt werden kann. Bei einer weiteren - nicht im einzelnen dargestellten - Variante besteht die Möglichkeit, die Abgabe eines Rufs an die umlegende Sprechstelle im Falle der erfolglosen Umlegung, die normalerweise durch ein entsprechendes zwangsweises Laden des Schieberegisters erzeugt wird, durch Eingabe einer entsprechenden Ziffer, beispielsweise der "Null" zu unterbinden.

Damit sind durch die erfindungsgemäße Ausführung einer Vermittlungsanlage eine Vielzahl von Varianten möglich, welche eine einfache Bedienbarkeit gewährleisten. Auch wenn die verschiedenen Merkmale gleichzeitig vorgesehen sind, bleiben sie für den Bedienenden übersichtlich und werden ohne längere Erläuterung verstanden, so daß eine einfache Handhabbarkeit in jedem Fall gesichert ist.

Für eine zusätzliche Hörzeichenübermittlung bei der zuletzt dargestellten Ausführung müßten - wie zuvor beschrieben - zusätzlich bistabile Elemente vorhanden sein, welche den umlegenden Apparat zwecks Adressierung für die Abgabe von Hörzeichen über die Hörmuschel (fest-)halten, wie es im Ausführungsbeispiel gemäß Figur 1 durch die Flip-Flops 31 bis 33 erfolgt. Insoweit lassen sich also Merkmale der in den beiden Ausführungsbeispielen dargestellten Vermittlungsanlagen beispielsweise auch ohne weiteres in ein und derselben Anlage nebeneinander verwenden, so daß die Anwendung der Erfindung und ihrer Weiterbildungen eine Vielzahl von Möglichkeiten offenläßt.

Die Funktionssteuerung einer derartigen Fernsprechvermittlungsanlage erfolgt bevorzugt programmierbar mittels eines Mikroprozessors.

* * * * *

P a t e n t a n s p r ü c h e


1.   Fernsprechvermittlungsanlage ohne Innensprechweg, die über eine Leitung aus dem übergeordneten Netz gespeist ist, mit

direkter Umlegung von ankommenden oder abgehenden Gesprächen innerhalb der Anlage, auf eine Betätigung des Wählorgans der umlegenden Sprechstelle hin, wobei

unterschiedliche Ziffern Umlegevorgängen zu verschiedenen Sprechstellen zugeordnet sind, und

dem Teilnehmer, zu dem das Gespräch umgelegt wird, dieses mit dem Aufnehmen auf einen entsprechenden Ruf hin unmittelbar zur Verfügung steht,

g e k e n n z e i c h n e t   d u r c h

Schaltmittel (50, 51, 53, 52), welche auf die Einleitung des Umlegevorgangs hin nach Abgabe von Rufsignalen einer vorgegebenen Anzahl oder für einen vorgegebenen Zeitraum den Umlegezustand beenden und die zuvor unterbrochene Verbindung der umlegenden Nebenstelle mit der Leitung des übergeordneten Netzes erneut herstellen.


2.   Fernsprechvermittlungsanlage nach Anspruch 1, d a - d u r c h   g e k e n n z e i c h n e t , daß eine eine ODER-Verknüpfung erzeugendes Element (52) vorgesehen ist, welches während des Umlegungszustands ein Zurückschalten des umlegenden Apparates auf die Leitung des übergeordneten Netzes bewirkt, aus der die Speisung erfolgt, und zwar auf ein Ausgangssignal der Schaltmittel nach Ablauf des vorgegebenen Zeitraums hin bzw. nach Erreichen der vorgegebenen Rufanzahl oder aber nach einer Schleifenerkennung für den Apparat, zu dem umgelegt werden soll.

3. Fernsprechvermittlungsanlage nach einem der vorangehenden Ansprüche, d a d u r c h   g e k e n n z e i c h - n e t , daß eine Signalschaltung (43) vorgesehen ist, welche kurz vor oder mit dem erneuten Herstellen der Verbindung zwischen umlegender Nebenstelle und der Amtsleitung eine Hörkennung als Aufmerksamkeitssignal an den das Gespräch bei abgenommen gehaltenem Hörer umlegenden Teilnehmer abgibt.

4. Fernsprechnebenstellenanlage nach einem der vorangehenden Ansprüche, d a d u r c h   g e k e n n z e i c h - n e t , daß logische Schaltungsmittel vorgesehen sind, in der Weise, daß bei inzwischen aufgelegtem Handapparat der umlegenden Nebenstelle bei dieser nach Ablauf des einen erfolglosen Umlegungsversuch kennzeichnenden Zeitraums ein Ruf veranlaßt und die Verbindung mit der speisenden Leitung hergestellt wird, wenn die umlegende Nebenstelle abgenommen wird.

5. Fernsprechvermittlungsanlage nach einem der vorangehenden Ansprüche, d a d u r c h   g e k e n n z e i c h -

**0122354**

n e t , daß Steuermittel vorgesehen sind, welche die Dauer des Rufs bei der umlegenden Nebenstelle auf einen vorgegebenen Zeitraum begrenzen.

6. Fernsprechvermittlungsanlage nach einem der vorangehenden Ansprüche, d a d u r c h g e k e n n z e i c h - n e t , daß durch Speichermittel (61) mittels einer bei Auslösung des Umlegungsvorgangs eingegebenen Ziffernfolge festlegbar ist, welcher der Nebenstellenapparate in einer Folge jeweils für einen vorgegebenen Zeitraum gerufen wird.

7. Fernsprechvermittlungsanlage nach einem der vorangehenden Ansprüche, d a d u r c h g e k e n n z e i c h - n e t , daß bei der aufeinanderfolgenden Eingabe von derselben Sprechstelle zugeordneten Ziffern eine Verlängerung der Rufdauer erfolgt.

8. Fernsprechvermittlungsanlage nach einem der vorangehenden Ansprüche, d a d u r c h g e k e n n z e i c h - n e t , daß die Rückgabe bzw. der Ruf an die umlegende Nebenstelle durch Eingabe der ihr zugeordneten Kennziffer an letzter Stelle in einer Ziffernfolge vorwählbar ist.

9. Fernsprechvermittlungsanlage nach einem der vorangehenden Ansprüche, d a d u r c h g e k e n n z e i c h - n e t , daß der im übrigen selbsttätig ausgelöste Ruf bzw. die Rückgabe an die umlegende Nebenstelle nach erfolglosem Umlegungsversuch durch Eingabe einer entsprechenden Kennziffer unterdrückbar ist, so daß die Amtsverbindung in diesem Fall ohne weiteres ausgelöst wird.

10. Fernsprechvermittlungsanlage nach einem der vorangehenden Ansprüche, d a d u r c h   g e k e n n z e i c h n e t , daß die Speichermittel (61) derart ausgebildet sind, daß sie die darin enthaltenen Daten in der Reihenfolge der Eingabe jeweils für im wesentlichen gleiche Zeiträume an ihrem Ausgang erscheinen lassen.

* * * * *

Fig.1

0122354

Fig.2